Europäisches Patentamt

European Patent Office

Office européen des brevets

(11) Veröffentlichungsnummer: **0 254 144**
**A2**

# (12) EUROPÄISCHE PATENTANMELDUNG

(21) Anmeldenummer: **87109908.1**

(22) Anmeldetag: **09.07.87**

(51) Int. Cl.⁴: **G01B 5/20**

(30) Priorität: **22.07.86 DE 3624717**

(43) Veröffentlichungstag der Anmeldung:
**27.01.88 Patentblatt 88/04**

(84) Benannte Vertragsstaaten:
**AT BE CH ES FR GB GR IT LI NL SE**

(71) Anmelder: **Pipetronix GmbH**
**Haid- und Neu-Strasse 7**
**D-7500 Karlsruhe 1(DE)**

(72) Erfinder: **Goedecke, Hartmut**
**Amselweg 8**
**D-6290 Weilburg(DE)**

(74) Vertreter: **Dr.-Ing. Hans Lichti Dipl.-Ing. Heiner**
**Lichti Dipl.-Phys. Dr. Jost Lempert**
**Postfach 41 07 60 Durlacher Strasse 31**
**D-7500 Karlsruhe 41(DE)**

(54) **Messgerät zur Feststellung von Unrundheiten an verlegten Rohrleitungen.**

(57) Ein Meßgerät zur Feststellung von Unrundheiten an verlegten Rohrleitungen in Form eines durch die Rohrleitung bewegten Molchs, besteht aus einem Trägerrohr mit einem in dessen Innenraum angeordneten Aufzeichnungsgerät, mehreren an dessen nachlaufendem Ende schwenkbar gelagerten, der Rohrwandung unter Federkraft anliegenden Tastfingern mit Tastrollen und einer in ihrem Zentrum an einer axialen Meßstange des Aufzeichnungsgerätes sphärisch gelagerten Scheibe, an deren Umfang die Tastfinger in einer deren Auslenkbewegung aus der beim Nenndurchmesser gegebenen Normallage in eine Kippbewegung der Scheibe und eine Axialbewegung der Meßstange umsetzenden Weise angreifen. Um ein vollflächiges Abtasten der Rohrwandung zu ermöglichen, sind wenigstens zwei Gruppen von Tastfingern vorgesehen, deren Tastrollen mit axialem Abstand hintereinander auf zwei Anordnungskreisen liegen und in Umfangsrichtung gegeneinander versetzt sind, derart, daß sich ihre Berührungsflächen mit der Rohrwandung in der Normallage überlappen.

EP 0 254 144 A2

## Meßgerät zur Feststellung von Unrundheiten an verlegten Rohrleitungen

Die Erfindung betrifft ein Meßgerät zur Feststellung von Unrundheiten an verlegten Rohrleitungen in Form eines durch die Rohrleitung bewegten Molchs, bestehend aus einem Trägerrohr mit einem in dessen Innenraum angeordneten Aufzeichnungsgerät, mehreren an dessen nachlaufendem Ende schwenkbar gelagerten, der Rohrwandung unter Federkraft anliegenden Tastfingern mit Tastrollen und einer in ihrem Zentrum an einer axialen Meßstange des Aufzeichnungsgerätes sphärisch gelagerten Scheibe, an deren Umfang die Tastfinger in einer ihre Auslenkbewegung aus der beim Nenndurchmesser gegebenen Normallage in eine Kippbewegung der Scheibe und eine Axialbewegung der Meßstange umsetzenden Weise angreifen.

Rohrleitungen, die über größere Strecken Rohöl, Gas oder dergleichen transportieren, sind im onshore Bereich unterirdisch und im offshore Bereich auf dem Meeresboden verlegt. Die Leitungen sind deshalb von außen nicht zugänglich. Gleichwohl müssen sie in Zeitabständen oder bei festgestellten Störungen inspiziert werden. Diese Inspektion kann nur von innen erfolgen und geschieht durch eine besondere Art von Meßgeräten, den sogenannten Meßmolchen, die durch die Rohrleitung bewegt werden, wobei sie in der Regel durch das geförderte Medium selbst angetrieben werden. Bei ihrer Bewegung durch die Rohrleitung können diese Geräte verschiedene Meßaufgaben durchführen, z.B. Korrosions-, Riß-oder Geometriemessungen an den Rohrleitungen oder auch Messungen am transportierten Medium.

Bei fehlerhafter Verlegung der Rohrleitung, z.B. bei Verlegung über örtlich begrenzte harte Gesteinsschichten, bei ungleichmäßig aufgetragener Erddeckung oder auch bei nach der Verlegung auftretenden Erdbewegungen kann sich die Rohrleitung aus ihrer kreisrunden Geometrie verformen. Es entsteht eine ovale Form oder einzelne Beulen. Solche Verformungen verändern die Festigkeitswerte der Rohrleitung, was insbesondere bei Druckbeaufschlagung zu örtlich höheren Spannungen und nach längerer Betriebszeit schließlich zum Bruch der Leitung führen kann. Es ist deshalb heute üblich, solche Rohrleitungen sofort nach der Verlegung und danach in regelmäßigen Zeitabständen auf ihre Rundheit zu überprüfen, um Fehler der genannten Art rechtzeitig festzustellen.

Die hierfür verwendeten, auch als Beulensuchmolch bezeichneten Geräte der eingangs genannten Art besitzen im wesentlichen stets den gleichen Aufbau. Sie bestehen aus einem zylindrischen Tragrohr, in dessen Inneren ein Aufzeichnungsgerät, z.B. ein Schreiber, angeordnet ist und das an beiden Enden über Führungsmittel an der Rohrwandung geführt ist. Um den Molch gegenüber der Rohrwandung abzudichten, sind unter Vorspannung stehende Manschetten vorgesehen, die zugleich die Führungsaufgabe übernehmen können. Darüber hinaus ist es bekannt, für die Führung zusätzliche Rollen zu verwenden, die über Schwenkarme am Tragrohr gelagert sind. Zur Feststellung der Rohrgeometrie dienen mehrere am nachlaufenen Ende des Tragrohrs schwenkbar gelagerte und sternförmig angeordnete Tastfinger, die an ihren freien Enden mit Tastrollen versehen sind und unter Federkraft der Rohrwandung anliegen. In ihrer beim Nenndurchmesser der Rohrleitung gegebenen Normallage befinden sich sämtliche Tastrollen auf einem konzentrischen Kreis. Jede Abweichung vom Nenndurchmesser , beispielsweise eine Ovalität oder eine Beule, führt zu einer Auslenkung von ein oder mehr Tastfingern, die auf das Aufzeichnungsgerät übertragen wird.

· Die Meßwertübertragung erfolgt dadurch, daß das Aufzeichnungsgerät eine am nachlaufenden Ende des Trägerrohrs herausgeführte Meßstange aufweist, die mit einer sphärisch auf ihr gelagerten Scheibe - eine Art Taumelscheibe - verbunden ist. Diese Scheibe wird mittels Federn, die mit Abstand von der Achse an ihr angreifen, in einer Ebene senkrecht zur Rohrachse ausgerichtet. An den Tastfingern sind im Bereich ihres inneren Schwenklagers Lenker angebracht, die am äußeren Umfang der Scheibe angreifen. Werden ein oder mehr Tastfinger aus der Normallage ausgelenkt, so wird diese Auslenkung über die Lenker der Scheibe mitgeteilt, die um ihr sphärisches Lager an der Meßstange kippt, da sie an der gegenüberliegenden Seite über die dort befindlichen Lenker und Tastfinger an der Rohrwandung abgestützt ist. Diese Keppbewegung führt zu einem Axialhub der Meßstange, der wiederum mittels des Aufzeichnungsgerätes registriert wird. Für Geräte dieser Art muß eine Eichkurve aufgenommen werden, da zwischen der Auslenkung und dem aufgezeichneten Wert keine lineare Abhängigkeit besteht.

Eine im wesentlichen gleiche Funktion liegt bei anderen bekanten Meßgeräten vor, bei denen die Tastfinger mit ihrem freien Ende einer die Rohrleitung ausfüllenden Manschette innenseitig anliegen, Unrundheiten in der Rohrgeometrie, also von der Manschette aufgenommen und dann erst auf die Tastfinger übertragen werden. Die letztgenannte Ausführung hat den Nachteil, daß zwischen den Tastfingern Lücken vorhanden sind. Weicht die Manschette aufgrund einer Unrundheit im Zwischenraum zwischen den Tastfingern aus, so wird das Ausmaß der Unrundheit nicht oder nur unvollständig auf die Tastfinger übertragen. Ferner hat die Manschette den Nachteil, daß sie sich am äußeren Umfang aufgrund der Wandreibung abnutzt, so daß sie der Rohrwandung nicht mehr satt anliegt und ein Spalt entsteht. Es lassen sich dann kleine Unrundheiten überhaupt nicht mehr aufnehmen und größere Abweichungen von der Kreisform werden nur noch mit geringerem Betrag registriert.

Günstiger sind demgegenüber diejenigen Geräte, bei denen die am Ende der Tastfinger angeordneten Tastrollen unmittelbar an der Rohrwandung laufen, da hierbei Abnutzungserscheinungen nur eine untergeordnete Rolle spielen. Im übrigen macht sich eine Abnutzung an sämtlichen Tastrollen gleichermaßen bemerkbar, so daß nur der Ausgangspunkt der Messung verschoben wird. Auch hier ergibt sich aber das Problem, daß zwischen den Tastrollen Lücken vorhanden sind, so daß örtlich begrenzte, schwach ausgeprägte Beulen unter Umständen gar nicht und großflächigere Beulen nur unzureichend ausgemessen werden. Da ferner solche Geräte nicht nur bei einem konstanten Innendurchmesser, sondern über einen gewissen Durchmesserbereich funktionsfähig sein sollen, sind die vorgenannten Nachteile um so gravierender, je größer der Nenndurchmesser ist.

Da die Tastfinger mit der zentrischen Scheibe und der auf diese wirkenden Federn ein Feder-Massensystem bilden, kann es insbesondere bei hoher Bewegungsgeschwindigkeit des Molchs zum Überschwingen kommen, so daß unter Umständen eine örtlich begrenzte Beule ohne Meßwertaufnahme überfahren wird. Auch ein Aufschwingen mit entsprechendem Nachlauf kann eintreten, mit der Folge, daß Meßwerte aufgezeichnet werden, obgleich eine Unrundheit nicht vorhanden ist.

Der Erfindung liegt die Aufgabe zugrunde, die vorgenannten Nachteile zu beheben und ein Meßgerät zu schaffen, das Unrundheiten jeder Größe und Ausprägung sicher feststellt und einwandfreie sowie reproduzierbare Meßwerte liefert.

Ausgehend von dem eingangs genannten Meßgerät wird diese Aufgabe dadurch gelöst, daß wenigstens zwei Gruppen von Tastfingern vorgesehen sind, deren Tastrollen mit axialem Abstand hintereinander auf zwei Anordnungskreisen liegen und in Umfangsrichtung gegeneinander versetzt sind derart, daß sich ihre Berührungsflächen mit der Rohrwandung in der Normallage überlappen.

Durch die erfindungsgemäße Anordnung von zwei Gruppen von Tastrollen, deren Berührungsflächen mit der Rohrwandung auf zwei axial hintereinander angeordneten Kreisen liegen, ist es möglich, die Rohrwandung auf ihrem gesamten Umfang fächendeckend abzutasten. Damit ist sichergestellt, daß auch örtlich eng begrenzte Unrundheiten von wenigstens einer Tastrolle erfaßt und aufgrund ihrer Auslenkung der Anzeigeeinrichtung mitgeteilt werden. Diese flächendeckende Abtastung der Rohrwandung ist bei entsprechend enger Anordnung der Tastrollen der beiden Gruppen auch über einen gewissen Nenndurchmesser-Bereich möglich, so daß ein erfindungsgemäß ausgebildeter Beulenmolch zum Ausmessen von Rohrleitungen unterschiedlicher Nenndurchmesser ausreicht.

Gemäß einem Ausführungsbeispiel der Erfindung können die Tastfinger der einen Gruppe länger sein als die der anderen. In diesem Fall sind die Tastfinger an ihrem inneren Ende auf einem gleichen Umfangskreis schwenkbar gelagert, während sich der axiale Abstand der Tastrollen der beiden Gruppen durch die unterschiedliche Länge der Tastfinger ergibt. Es können aber auch die Tastfinger gleich lang sein, wobei sie dann entsprechend dem Abstand der Gruppen mit Abstand voneinander schwenkbar gelagert sind. In diesem Fall ist nur dafür zu sorgen, daß die zwischen den Tastfingern und der Scheibe vorgesehenen Übertragungselemente diesem Abstand Rechnung tragen.

Gemäß einem weiteren Ausführungsbeispiel ist vorgesehen, daß die Tastfinger leistenartig mit ihrer Schmalseite in einer Radialebene liegend ausgebildet sind und daß zu beiden Seiten jedes leistenartigen Tastfingers je eine Tastrolle gelagert ist. Durch diese Maßnahme wird die flächendeckende Anlage der Tastrollen an der Rohrwandung begünstigt.

Dieser Vorteil kann gemäß einer anderen Ausführung auch dadurch erreicht werden, daß die Tastfinger an ihrem äußeren Ende eine Gabel aufweisen, zwischen deren Gabelarmen eine Tastrolle gelagert ist, die dann eine entsprechend größere axiale Ausdehnung aufweist.

Gemäß einem weiteren Merkmal der Erfindung weist jeder Tastfinger ein Kurvensegment auf, über das er am äußeren Umfang der Scheibe lose angreift.

Durch diese erfindungsgemäße Ausbildung wird bei eng begrenzten Unrundheiten die Scheibe nur durch den jeweils ausgelenkten Tastfinger gekippt, wobei sie sich an dem Kurvensegment des gegenüberliegenden Tastfingers abstützt, ohne daß diese Bewegung auf die anderen Tastfinger einen Einfluß hat. Es lassen sich somit wesentlich exakter örtlich begrenzte Unrundheiten feststellen. Durch die bloße Anlage der Kurvensegmente an der Scheibe, die im übrigen nur noch unter einer zentrischen Federkraft stehen braucht, ist das System wesentlich weniger empfindlich gegen Aufschwingen oder Überschwingen.

Ferner läßt sich durch die Formgebung des Kurvensegmentes eine lineare Abhängigkeit zwischen dem Auslenkweg, also der Beulentiefe einerseits und dem Axialhub der Meßstange andererseits herstellen, so daß der vom Aufzeichnungsgerät registrierte Wert der festgestellten Unwucht entspricht. Es ist folglich nicht notwendig, eine Eichkurve aufzunehmen.

Um die Reibung im System zu minimieren kann weiterhin vorgesehen sein, daß jedem Kurvensegment an den Tastfingern eine am äußeren Umfang der Scheibe vorgesehene Gleitfläche oder aber eine dort gelagerte Rolle zugeordnet ist.

Neben der zuvor genannten Möglichkeit der Abstimmung der Form der Kurvensegmente zur Erzeugung einer linearen Abhängigkeit zwischen Auslenkweg und Axialhub ist mit Vorteil vorgesehen, daß die Form der Kurvensegmente der beiden Gruppen von Tastfingern so ausgelegt ist, daß trotz verschiedener Auslenkwege ein gleicher Axialhub an der Meßstange entsteht.

Nachstehend ist die Erfindung anhand von in der Zeichnung wiedergegebenen Ausführungsbeispielen beschrieben. In der Zeichnung zeigen:

Fig. 1 einen Längsschnitt durch eine Ausführungsform des Meßgerätes;

Fig. 2 eine Ansicht auf das nachlaufende Ende des Trägerrohrs gemäß Fig. 1 ohne die Meßstange und die Scheibe und

Fig. 3 eine der Fig. 2 entsprechende Ansicht einer anderen Ausführungsform.

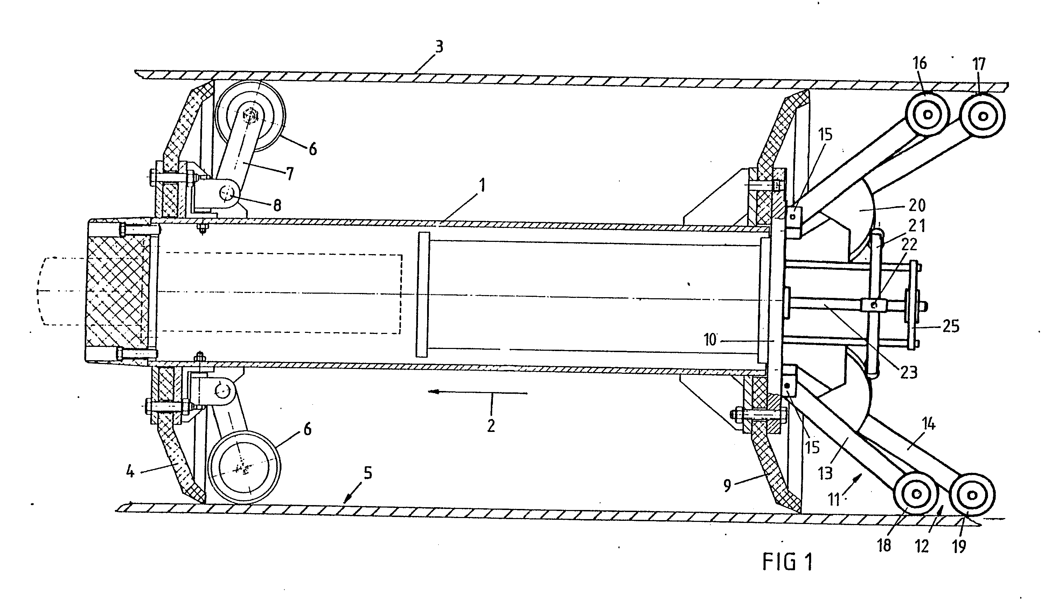

Das Meßgerät gemäß Fig. 1 weist ein zylindrisches Trägerrohr 1 auf, in dessen Innenraum ein nicht näher gezeigts Aufzeichnungsgerät angeordnet ist. Im Meßbetrieb bewegt sich das Meßgerät in Richtung des Pfeils 2 durch eine Rohrleitung 3.

Am vorlaufenden Ende des Trägerrohrs ist eine unter Vorspannung stehende Manschette 4 angeordnet, die mit ihrer Peripherie der Rohrwandung 5 dichtend anliegt. Weiterhin sind hinter der Manschette 4 Führungsmittel in Form von Rollen 6 vorgesehen, die über Arme 7 bei 8 schwekbar am Tragrohr 1 gelagert sind.

Am nachlaufenden Ende des Trägerrohrs 1 ist eine weitere Manschette 9 angeordnet, die gleichfalls der Rohrwandung 5 dichtend anliegt. Die beiden Manschetten sorgen dafür, daß sich das Meßgerät mit dem geförderten Medium durch das Rohr 3 fortbewegt.

Hinter der Manschette 9 sind an einer Tragscheibe 10 zwei Gruppen 11, 12 von Tastfingern 13, 14 bei 15 schwenkbar gelagert. Wie aus Fig. 1 ersichtlich, sind die Tastfinger 13 der Gruppe 11 kürzer ausgebildet als die Tastfinger 14 der Gruppe 12. Die Tastfinger 13, 14 beider Gruppen tragen an ihren freien Enden Follen 16 bzw. 17. Aufgrund der unterschiedlichen Länge der Tastfinger 13, 14 liegen die Tastrollen 16, 17 auf zwei mit axialem Abstand voneinander angeordneten Kreisen. Im übrigen sind die Tastrollen 16, 17 bei 18 bzw. 19 an den Tastfingern 13, 14 drehbar gelagert.

Jeder Tastfinger weist nahe seinem inneren Schwenklager 15 ein nach innen ragendes Kurvensegment 20 auf, das einer zentrischen Scheibe 21 im Bereich des äußeren Umfangs lose anliegt. Dabei kann die Scheibe 21 entsprechende Gleitflächen. oder rollen aufweisen. Die Scheibe 21 ist bei 22 an einer Meßstange 23 sphärisch gelagert. Die Meßstange 23 ist an der Tragplatte 10 und an einem darauf aufgebauten Joch 25 axial geführt. Die Meßstange ist Teil des nichtgezeigten Aufzeichnungsgerätes, das in dem Tragrohr 1 angeordnet ist.

Die Auslenkbewegung von einem oder mehreren Tastfingern 13, 14 wird über die Kurvensegmente 20 auf die Scheibe 21 übertragen, die sich und den jeweils gegenüberliegenden Kurvensegmenten abstützt und so eine Kippbewegung um das sphärische Lager 22 ausführt und dabei die Meßstange 23 mitnimmt. Der Axialhub der Meßstange 23 wird von dem Aufzeichnungsgerät registriert.

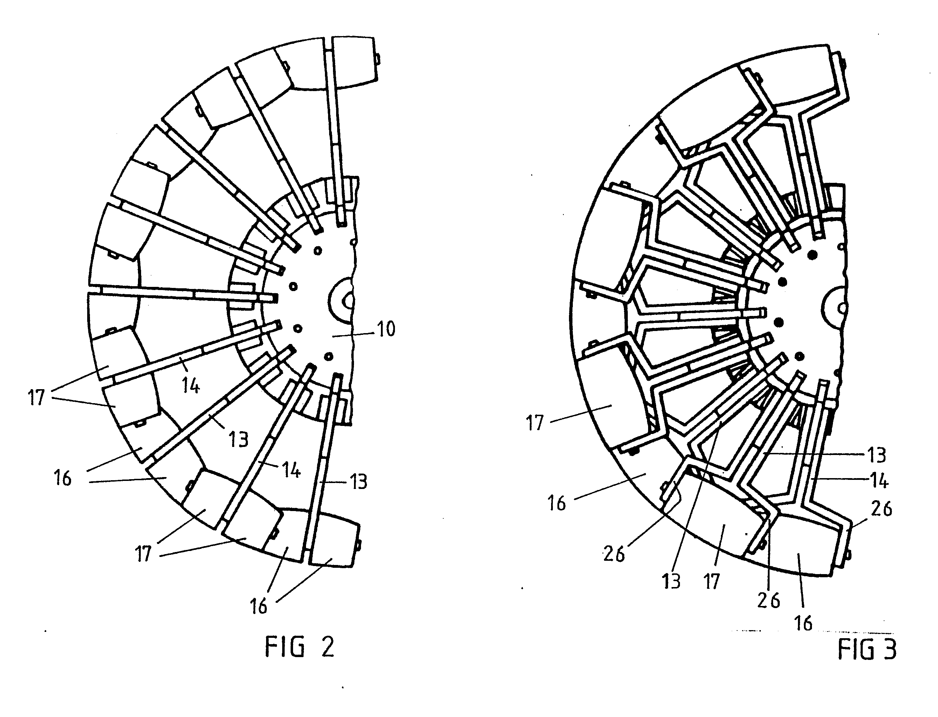

Bei dem in Fig. 2 gezeigten Ausführungsbeispiel sind die Tastfinger 13, 14 beider Gruppen 11, 12 leistenartig ausgebildet, wobei sie mit ihrer Schmalseite in einer radialen Ebene liegen. Zu beiden Seiten sind an den leistenartigen Tastfingern je eine Tastrolle 16 bzw. 17 gelagert. Wie aus Fig. 2 ersichtlich, überlappen sich die Laufflächen der Tastrollen 16 der einen Gruppe und der Laufrollen 17 de anderen Grupe, so daß die Rohrwandung 5 flächendeckend abgetastet wird.

Bei dem Ausführungsbeispiel gemäß Fig. 3 weisen die Tastfinger 13 und 14 beider Gruppen an ihren freien Enden Gabeln auf, zwischen deren Gabelarmen 26 je eine längliche Tastrolle 16 bzw. 17 gelagert ist. Auch hier entsteht durch die Anordnung von zwei Gruppen von Tastfingern bzw. Tastrollen eine über den gesamten Umfang geschlossene Berührungsfläche.

## Ansprüche

1. Meßgerät zur Feststellung von Unrundheiten an verlegten Rohrleitungen in Form eines durch die Rohrleitung bewegten Molchs, bestehend aus einem Trägerrohr mit einem in dessen Innenraum angeordneten Aufzeichnungsgerät, mehreren an dessen nachlaufendem Ende schwenkbar gelagerten, der Rohrwandung unter Federkraft anliegenden Tastfingern mit Tastrollen und einer in ihrem Zentrum an einer axialen Meßstange des Aufzeichnungsgerätes sphärisch gelagerten Scheibe, an deren Umfang die Tastfinger in einer ihre Auslenkbewegung aus der beim Nenndurchmesser gegebenen Normallage in eine Kippbewegung der Scheibe und eine Axialbewegung der Meßstange umsetzenden Weise angreifen,

**dadurch gekennzeichnet,** daß wenigstens zwei Gruppen (11, 12) von Tastfingern (13, 14) vorgesehen sind, deren Tastrollen (16, 17) mit axialem Abstand hintereinander auf zwei Anordnungskreisen liegen und in Umfangsrichtung gegeneinander verzetzt sind, derart, daß sich ihre Berührungsflächen mit der Rohrwandung (5) in der Normallage überlappen.

2. Meßgerät nach Anspruch 1, dadurch gekennzeichnet, daß die Tastfinger (13) der einen Gruppe (11) länger sind als die (14) der anderen (12).

3. Meßgerät nach Anspruch 1 oder 2, dadurch gekennzeichnet, daß die Tastfinger (13, 14) leistenartig mit ihrer Schmalseite in einer Radialebene liegend ausgebildet sind und daß zu beiden Seiten jedes leistenartigen Tastfingers je eine Tastrolle (16, 17) gelagert ist.

4. Meßgerät nach Anspruch 1 oder 2, dadurch gekennzeichnet, daß die Tastfinger (13, 14) an ihrem äußeren Ende eine Gabel aufweisen, zwischen deren Gabelarmen (26) eine Tastrolle (16, 17) gelagert ist.

5. Meßgerät nach einem der Ansprüche 1 bis 4, dadurch gekennzeichnet, daß jeder Tastfinger (13, 14) ein Kurvensegement (20) aufweist, über das er am äußeren Umfang der Scheibe (21) lose angreift.

6. Meßgerät nach einem der Ansprüche 1 bis 5, dadurch gekennzeichnet, daß jedem Jurvensegment (20) und den Tastfingern (13, 14) eine am äußeren Umfang der Scheibe (21) vorgesehene Gleitfläche zugeordnet ist.

7. Meßgerät nach einem der Ansprüche 1 bis 5, dadurch gekennzeichnet, daß jedem Kurvensegment (20) an den Tastfingern (13, 14) eine am äußeren Umfang der Scheibe (21) gelagerte Rolle zugeordnet ist.

8. Meßgerät nach einem der Ansprüche 1 bis 7, dadurch gekennzeichnet, daß die Kurvensegmente (29) der Tastfinger (13, 14) der beiden Gruppen (11, 12) so ausgebildet sind, daß gleiche Auslenkwege der Tastfinger zu einem gleichen Kippwinkel der Scheibe (21) und somit zu einem gleichen Axialhub der Meßstange (23) führen.

9. Meßgerät nach einem der Ansprüche 1 bis 8, dadurch gekennzeichnet, daß die Kurvensegmente (20) eine eine lineare Proportionalität zwischen Auslenkweg der Tastfinger (13, 14) und Axialhub der Meßstange (23) erzeugende Form aufweisen.

FIG 1

0 254 144

FIG 2

FIG 3

0 254 144